# EUROPEAN PATENT APPLICATION

(11) **EP 3 401 208 A1**
(43) Date of publication of application: **14.11.2018**
(21) Application number: 17400022.4
(22) Date of filing: 10.05.2017
(51) Int. Cl.: B64C 1/14

(54) **AN AIRCRAFT DOOR WITH AT LEAST ONE WEIGHT COMPENSATION DEVICE**

(71) Applicant: AIRBUS HELICOPTERS DEUTSCHLAND GmbH, 86609 Donauwörth (DE)
(72) Inventor: König, Daniel, 86453 Dasing (DE); Wolf, Christian, 89231 Neu-Ulm (DE); Tendyra, Thomas, 89443 Schwenningen (DE)
(74) Representative: GPI & Associés

(57) **Abstract**

The invention is related to an aircraft door 4d with at least one weight compensation device 6, the weight compensation device 6 comprising at least one pre-loadable torsion member 6d, wherein the at least one pre-loadable torsion member 6d is coupled to an adjustment unit 7 for adjusting a respective pre-load that is applied to the at least one pre-loadable torsion member 6d, and wherein the adjustment unit 7 comprises at least one worm drive 7a.

## Description

The invention is related to an aircraft door with at least one weight compensation device. The invention is further related to an aircraft with such an aircraft door.

Aircraft doors must generally fulfil predefined airworthiness requirements in order to allow for a safe, secure and reliable operation of respective aircrafts. Such airworthiness requirements are defined in applicable safety regulations and specifications, such as the US-American Federal Aviation Regulations (FAR) and/or the European Certification Specifications (CS) from the European Aviation Safety Agency (EASA).

According to these airworthiness requirements, the aircraft doors of a given aircraft must be tightly locked in an associated closed state during operation of the given aircraft. The aircraft doors must further be capable of taking up all loads to which they may be exposed during operation of the given aircraft in the closed state. Furthermore, if the given aircraft is equipped with a pressurized cabin, the aircraft doors must additionally be capable of withstanding a respective internal cabin pressure during flight.

However, in case of an emergency during operation of the given aircraft, it must nevertheless be possible to open the aircraft doors easily and rapidly. Furthermore, if the given aircraft is intended for transportation of passengers, each aircraft door that is provided for use by passengers must be equipped with an emergency slide that must be activatable and deployable in an emergency case through corresponding operating elements of the aircraft door itself.

More specifically, in the closed state usually a form-locked connection is realized between a respective aircraft door and the given aircraft resp. an associated aircraft body structure, wherein the aircraft door is additionally locked. In order to create such a form-locked connection between the respective aircraft door and the associated aircraft body structure, and for transmitting all forces resulting from the internal cabin pressure, various differing door opening/closing mechanisms are available.

The document US 5,251,851 describes a door opening/closing mechanism for an aircraft door, which performs all door motions and locking operations for opening and closing of the aircraft door with the aid of electric motors. These electric motors operate corresponding elements of the door opening/closing mechanism through gear drives or through spindle drives to provide the power or torque moment for the respective motion.

However, this door opening/closing mechanism is only controlled on the basis of pre-programmed values. Such pre-programmed values are suitable to define a broad generic basis for a given aircraft door type, but they may require acceptance of broad tolerances between different individual aircraft doors.

Alternative conventional door opening/closing mechanisms usually require manually performed operating steps, such as closing, locking, unlocking, opening, and activating of the emergency slide. These manually performed operating steps, however, require a certain physical strength of an operator who operates the respective aircraft door. This required physical strength must not only be sufficient to overcome a basic force resulting from a corresponding weight of the respective aircraft door, but also to overcome additional forces emanating from bearing friction, seal friction, cover plate friction, side loads and thermal elongation, which usually result in comparatively high forces that must be overcome when opening the respective aircraft door.

These comparatively high forces can be compensated in order to enable a comfortable opening of the respective aircraft door especially in case of an emergency. Thus, correspondingly high forces necessary for opening of the respective aircraft door can be reduced in order to minimize the required physical strength of an operator who operates the respective aircraft door and, in particular, who is required to open the respective aircraft door. For this purpose, usually a weight compensation device is provided as part of the door opening/closing mechanism.

The document EP 0 237 810 A2 describes a weight compensation device that includes a torsion bar spring that can be pre-loaded through an adjustment screw. More specifically, a translational movement of the adjustment screw is translated by means of a movement translation lever into a rotational movement of a torsion bar spring pre-loading lever in order to pre-load the torsion bar spring by means of the torsion bar spring pre-loading lever. The adjustment screw is then secured and an adjusted force of the pre-loaded torsion bar spring is permanently transferred by means of a pre-load transfer lever into the door opening/closing mechanism.

However, adjustment of this weight compensation device is only possible during maintenance, but not during operation of the respective aircraft door, and an initial adjustment (rigging) of the weight compensation device to respectively required handle forces usually demands significant efforts in aircraft major component assembly. Furthermore, a final adjustment of an underlying operation point of the weight compensation device must be performed several times during aircraft assembly in order to allow operation of the respective aircraft door within given limits: The initial installation is made into barrel, after barrel assembly, and after assembly of cabin lining and emergency slide.

Moreover, it must be considered that compensation forces provided by the given weight compensation device must be overcome when closing an opened aircraft door. In other words, there is a direct coupling of respectively required opening and closing forces so that respectively required closing handle forces required for closing an opened aircraft door cannot be influenced by means of the initial adjustment due to the fact that they result from the required compensation forces. This has a negative effect on overall required operating forces.

It should be noted that still other weight compensation devices are also known. For instance, the document US 3,421,262 describes a load balancer for a hinged drop end door of a railway gondola car in which a single torsion bar spring acts between the door and a respective car body over the full range of movement of the door. The single torsion bar spring is energized on opening of the door and releases its energy on closing of the door. However, with this load balancer it must be considered that compensation forces provided by the latter must be overcome when opening a respective door.

It is, therefore, an object of the present invention to provide a new aircraft door with at least one weight compensation device that is suitable to overcome the above-described drawbacks. Furthermore, it is an object of the present invention to provide a new aircraft having such a new aircraft door.

This object is solved by an aircraft door with at least one weight compensation device, said aircraft door comprising the features of claim 1. The object is further solved by an aircraft with at least one aircraft door, said aircraft comprising the features of claim 15.

More specifically, the present invention provides an aircraft door with at least one weight compensation device, the weight compensation device comprising at least one pre-loadable torsion member, wherein the at least one pre-loadable torsion member is coupled to an adjustment unit for adjusting a respective pre-load that is applied to the at least one pre-loadable torsion member. The adjustment unit comprises at least one worm drive.

According to one aspect, the adjustment unit is realized by means of an electric planetary motor that is used for adjusting the respective pre-load that is applied to the at least one pre-loadable torsion member, which is preferably embodied as a weight compensation spring. A corresponding moment that is applied by the electric planetary motor is translated by a worm gear. Thus, a comparatively high moment can be introduced to a drive shaft of the worm drive by means of a comparatively small electric motor. Preferably, an initial tension resp. potential energy of the weight compensation spring is kept on failure of an underlying electrical system through a self-locking capability of at least one worm drive.

Preferably, the inventive weight compensation device enables an adjustment of a respective handle force support of the weight compensation spring during operation of a respective aircraft that is provided with an aircraft door that includes the inventive weight compensation device. Furthermore, the inventive weight compensation device enables definition of distinct independent points of operation of the aircraft door, e. g. for opening operation and closing operation separately. Thus, opening and closing operation of the aircraft door can advantageously be decoupled.

According to one aspect, the respective pre-load that is applied to the weight compensation spring is applied such that in closed aircraft door position a resulting tension force provided by the weight compensation spring is adjusted to a usual level or required opening handle forces. Preferably, actual handle forces and/or the weight of the aircraft door are measured for determining a suitable respective pre-load. As a result, in normal operation and in case of emergency, a comfortable door opening can be achieved, as a smaller handle operation force must be provided by an operator for opening the aircraft door. In particular, by measuring the actual handle forces and/or the weight of the aircraft door, condensation water and other unpredicted impacts on the weight of the aircraft door can be compensated even during a respective aircraft assembly process, such that an automated weight compensation spring adjustment and a self-rigging functionality can be implemented.

In case of a complete power loss, e. g. in an emergency case, and if the aircraft door is still completely closed, the resulting tension force is however preferably hold through the worm drive's self-locking capability. Thus, a comfortable door opening can still be achieved, as a smaller handle operation force must be provided by an operator for opening the aircraft door.

In opened aircraft door position, the respective pre-load that is applied to the weight compensation spring is applied such that a resulting tension force provided by the weight compensation spring is reduced in order to enable a comfortable closing of the aircraft door by an operator. In other words, a respectively required handle operation force is reduced. The reduction of the resulting tension force might, however, not be possible in case of a complete power loss, e. g. in an emergency case, and if the aircraft door is already completely opened, with or without unfolded emergency slide. In this case, the resulting tension force is preferably hold through the worm drive's self-locking capability. In this extremely rare and unusual case, a complete closure of the aircraft door would require a handle force that is comparable to a handle force required with conventional aircraft doors. However, an additional battery pack might advantageously be provided to eliminate this drawback.

According to a preferred embodiment, the at least one worm drive is a self-locking worm drive.

According to a further preferred embodiment, the at least one worm drive comprises a worm gear that is mounted to the at least one pre-loadable torsion member, and a worm that is mounted to a drive shaft, wherein activation of the drive shaft is required for activation of the at least one worm drive.

According to a further preferred embodiment, a worm gear unit with a hollow rotary axis is provided, the worm gear being integrally formed with or rigidly attached to the hollow rotary axis, wherein the hollow rotary axis is coupled to the at least one pre-loadable torsion member at least by means of a form-fit connection.

According to a further preferred embodiment, the worm is coupled to the drive shaft at least by means of a form-fit connection.

According to a further preferred embodiment, the drive shaft is coupled to an electrical drive unit.

According to a further preferred embodiment, the electrical drive unit comprises an associated drive unit output shaft that is drivable by means of the electrical drive unit, wherein at least one driving end worm drive is provided for transmitting driving power provided by the electrical drive unit from the associated drive unit output shaft to the drive shaft.

According to a further preferred embodiment, the at least one driving end worm drive is a self-locking worm drive. However, it should be noted that such a self-locking capability is not mandatory for the at least one driving end worm drive and may, thus, also be omitted.

According to a further preferred embodiment, the at least one driving end worm drive comprises a driving end worm gear that is mounted to the drive shaft, and a driving end worm that is mounted to the associated drive unit output shaft, wherein activation of the associated drive unit output shaft is required for activation of the at least one driving end worm drive.

According to a further preferred embodiment, the driving end worm gear is coupled to the drive shaft at least by means of a form-fit connection.

According to a further preferred embodiment, the driving end worm is coupled to the associated drive unit output shaft at least by means of a form-fit connection.

According to a further preferred embodiment, the electrical drive unit is controllable such that the at least one pre-loadable torsion member is at least preloaded with a first pre-load during opening of the aircraft door and with a second pre-load during closing of the aircraft door.

According to a further preferred embodiment, the first and second pre-loads are adjusted on the basis of a measured weight of the aircraft door and/or on the basis of respectively measured opening and/or closing forces required in uncompensated opening and/or closing movements. Thus, an adjustment may even advantageously be performed during opening and/or closing of the aircraft door.

According to a further preferred embodiment, the at least one pre-loadable torsion member is a torsion rod. However, it should be noted that any other pre-loadable torsion member, such as e. g. a twistable beam and so on, is likewise contemplated.

The present invention further provides an aircraft that comprises at least one aircraft door that is realized as described above.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of an aircraft having at least one aircraft door with a weight compensation device according to the present invention,
- Figure 2 shows a schematic illustration of the at least one aircraft door of Figure 1,
- Figure 3 shows a perspective view of an enlarged detail of driven components of the weight compensation device of the at least one aircraft door of Figure 2,
- Figure 4 shows a perspective view of the driven components of the weight compensation device of Figure 3,
- Figure 5 shows a sectional view of the driven components of the weight compensation device of Fig. 4, seen in direction of a cut line V-V in Figure 4,
- Figure 6 shows a perspective view of an enlarged detail of driving and driven components of the weight compensation device of the at least one aircraft door of Figure 2,
- Figure 7 shows a perspective view of the driving and driven components of the weight compensation device of Figure 6, and
- Figure 8 shows an enlarged, partly sectional view of the driving and driven components of the weight compensation device of Figure 7.

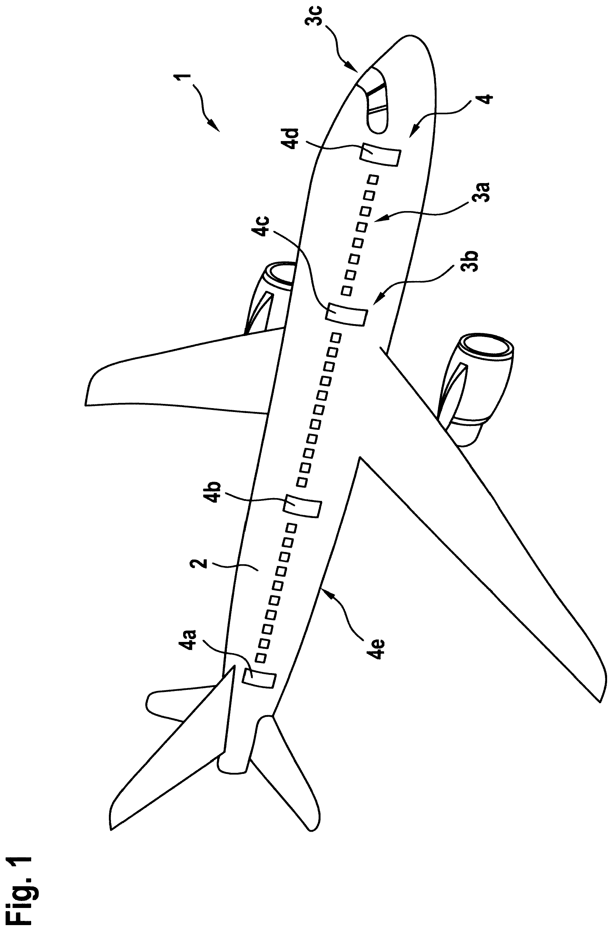

Figure 1 shows an aircraft 1 with an aircraft airframe 2. The aircraft 1 illustratively comprises a passenger cabin 3a, a cargo deck 3b and a flight deck or cockpit 3c. Preferably, the aircraft 1 is accessible via a plurality of aircraft doors 4; which exemplarily comprises several cabin access doors 4a, 4b, 4c and 4d, as well as one or more cargo deck access doors 4e. By way of example, the passenger cabin 3a and the flight deck 3c are accessible via the cabin access doors 4a, 4b, 4c and 4d, and the cargo deck 3b is accessible via the one or more cargo deck access doors 4e. The plurality of aircraft doors 4 is preferably adapted to close the aircraft airframe 2 of the aircraft 1, preferentially in a fluid-tight manner.

Illustratively, the aircraft 1 is an airplane. However, the present invention is not limited to airplanes. Instead, any vehicle that may be equipped with aircraft doors according to the present invention is likewise contemplated. By way of example, the present invention may alternatively be applied to vessels, such as ships and so on. Consequently, the present invention is not limited to aircraft doors, but can likewise be applied to any arbitrary vehicle door. However, for purposes of illustration, the present invention is hereinafter described with respect to aircraft doors.

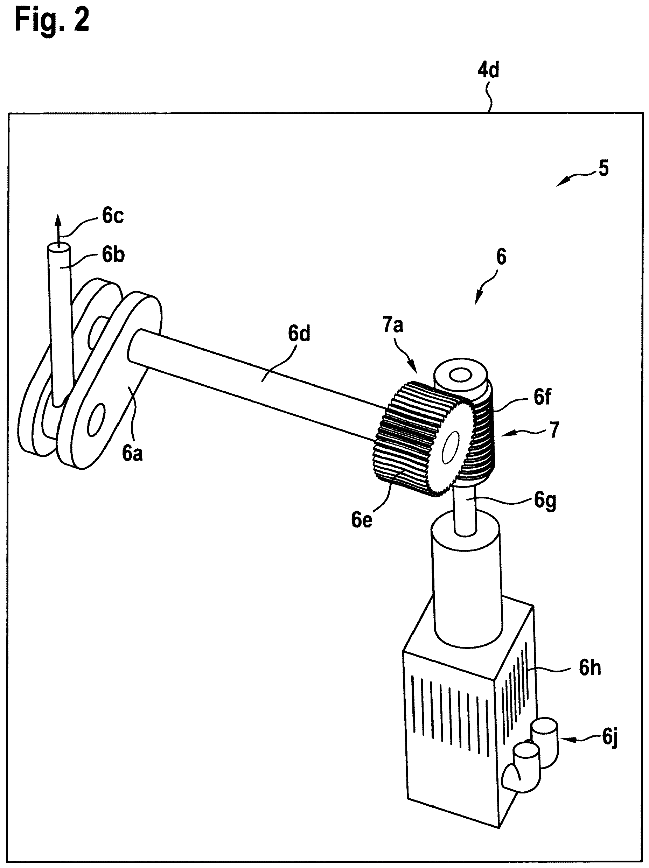

Figure 2 shows the cabin access door 4d of Figure 1, which is hereinafter described in more detail. However, it should be noted that the cabin access door 4d is merely described representatively for each one of the plurality of aircraft doors 4 of the aircraft 1 of Figure 1. Therefore, the cabin access door 4d is hereinafter generally referred to as the "aircraft door 4d". Furthermore, it should be noted that the aircraft door 4d is even more generally only described by way of example for an arbitrary vehicle door, to which the present invention can be applied.

The aircraft door 4d generally comprises a door structure 5, which can e. g. be implemented by a plurality of frames arranged between an inner and an outer door skin. However, the basic construction of the aircraft door 4d as such is not part of the present invention and well known to the person skilled in the art. Therefore, the basic construction is not described in more detail hereinafter, for brevity and conciseness.

According to one aspect, the aircraft door 4d comprises at least one weight compensation device 6. However, it should be noted that in Fig. 2 the weight compensation device 6 is only represented in a simplified manner for illustrating its constituent components and its functioning.

Preferably, the weight compensation device 6 comprises at least one pre-loadable torsion member 6d. The at least one pre-loadable torsion member 6d is coupled to an adjustment unit 7 for adjusting a respective pre-load that is applied to the at least one pre-loadable torsion member 6d. Illustratively, the at least one pre-loadable torsion member 6d is a torsion rod. However, it should be noted that any other pre-loadable torsion member, such as e. g. a twistable beam and so on, is likewise contemplated.

By way of example, the at least one pre-loadable torsion member 6d is connected to a force transmission lever 6a. More specifically, the at least one pre-loadable torsion member 6d may either be integrally formed in one piece with the force transmission lever 6a, or alternatively be rigidly connected in a non-rotatable manner to the force transmission lever 6a.

The force transmission lever 6a in turn is illustratively connected to an exemplary force transmission rod 6b in a rotatable manner. The latter is preferably provided for transmission of a weight compensation force 6c resulting from a respective pre-load of the at least one pre-loadable torsion member 6d via the adjustment unit 7.

According to one aspect, the adjustment unit 7 comprises at least one worm drive 7a. The latter is preferably implemented as a self-locking worm drive.

Illustratively, the at least one worm drive 7a comprises a worm gear 6e that is mounted to the at least one pre-loadable torsion member 6d, and a worm 6f that is mounted to a drive shaft 6g. The worm gear 6e may also be referred to as a worm wheel and the worm 6f as a worm screw.

Preferably, activation of the drive shaft 6g is required for activation of the at least one worm drive 7a. According to one aspect, the drive shaft 6g is coupled to an electrical drive unit 6h. The latter may e. g. be realized by means of an electrical motor and a planetary gear. However, the present invention is not restricted to such a realization and any other suitable electrical drive unit, such as e. g. a step motor and so on is likewise contemplated.

By way of example, the electrical drive unit 6h is electrically connected to a suitable power supply, which is only schematically represented by two schematically illustrated cable wires 6j. The suitable power supply is preferably implemented by an on-board power supply system of the aircraft 1 of Figure 1. However, alternatively and/or optionally, one or more battery packs may be provided as power supply for the electrical drive unit 6h.

According to one aspect, the electrical drive unit 6h is controllable such that the at least one pre-loadable torsion member 6d is at least preloaded with a first pre-load during opening of the aircraft door 4d and with a second pre-load during closing of the aircraft door 4d. The first and second pre-loads are preferably adjusted on the basis of a measured weight of the aircraft door 4d and/or on the basis of respectively measured opening and/or closing forces required in uncompensated opening and/or closing movements.

In operation of the at least one weight compensation device 6, the electrical drive unit 6h rotates the drive shaft 6g and, thus, the worm 6f on the basis of associated drive parameters, which are at least determined based on the measured weight of the aircraft door 4d and/or the respectively measured opening and/or closing forces required in uncompensated opening and/or closing movements. By rotating the worm 6f, the worm gear 6e is forced to rotate and, thus, the at least one pre-loadable torsion member 6d is twisted resp. pre-loaded with a respective pre-load. Dependent on an underlying rotation direction of the drive shaft 6g, a resulting weight compensation force 6c can be adjusted as required and different operating points of the weight compensation device 6 can be determined. For instance, such operating points may differ for respective opening and closing movements of the aircraft door 4d.

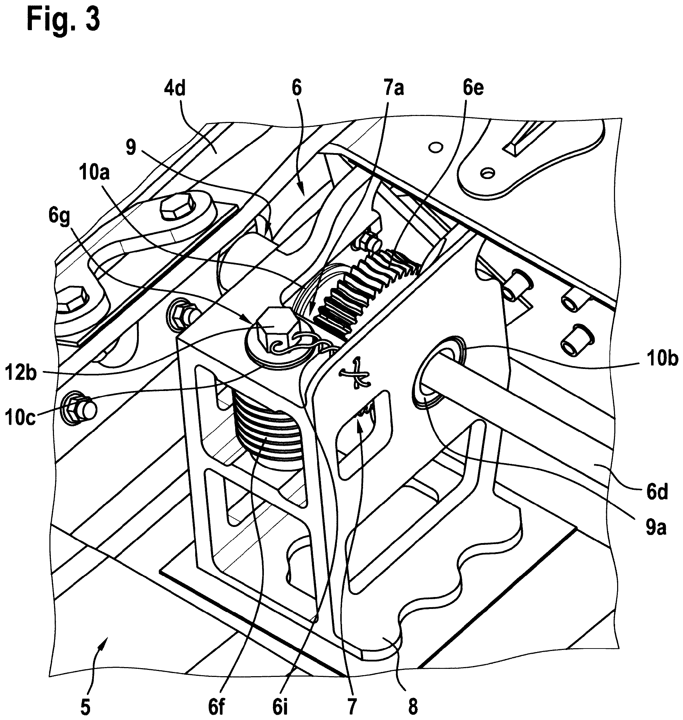

Hereinafter, a preferred realization of the aircraft door 4d and the weight compensation device 6 is described in more detail with reference to Figure 3 to Figure 8.

Figure 3 shows the aircraft door 4d with the door structure 5 of Figure 2, which is provided with the at least one weight compensation device 6 that comprises the adjustment unit 7 of Figure 2. The at least one weight compensation device 6 preferably comprises a mounting element 8 that mounts the adjustment unit 7 to the door structure 5 of the aircraft door 4d. However, it should be noted that for simplicity and clarity of the drawings, only a driven side of the at least one weight compensation device 6 resp. the adjustment unit 7 is illustrated in Figure 3.

More specifically, according to one aspect the driven side of the at least one weight compensation device 6 resp. the adjustment unit 7 includes the at least one worm drive 7a. The at least one worm drive 7a is preferably provided with a worm gear unit 9 that has a hollow rotary axis 9a. Preferentially, the hollow rotary axis 9a is integrally formed with the worm gear 6e, or at least rigidly attached thereto. The hollow rotary axis 9a is preferably further coupled to the at least one pre-loadable torsion member 6d in a non-rotatable manner.

Illustratively, the worm gear unit 9 and, more specifically, the hollow rotary axis 9a is accommodated in the mounting element 8 in a rotatable manner. By way of example, this is achieved by means of associated slide bushings 10a, 10b. However, it should be noted that the associated slide bushings 10a, 10b are merely exemplary and not for restricting the present invention thereto. Instead, use of any other applicable bearing types, such as roller bearings and so on, is likewise contemplated.

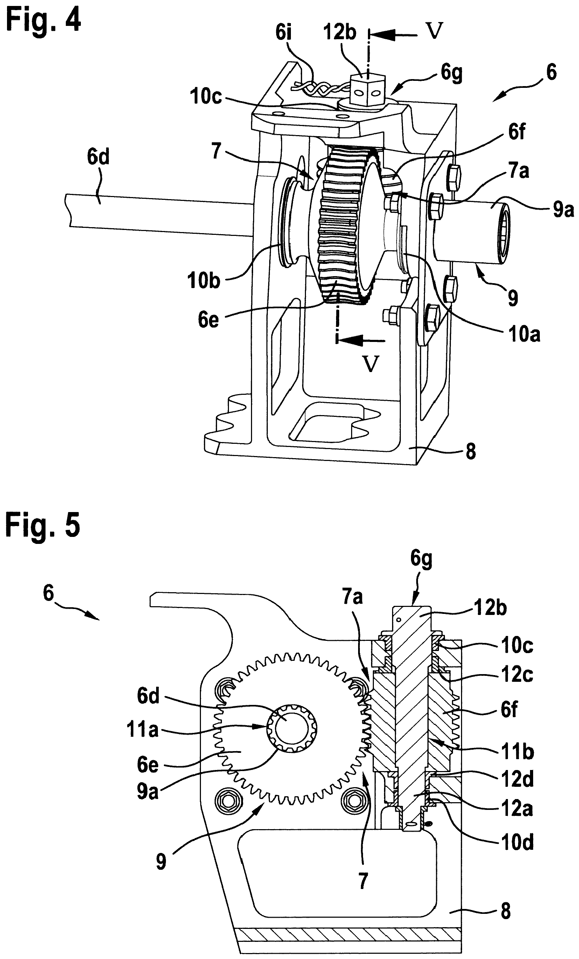

According to one aspect, the worm gear 6e meshes with the worm 6f. The latter is preferably accommodated in a non-rotatable manner on the drive shaft 6g. The drive shaft 6g is preferentially accommodated in the mounting element 8 in a rotatable manner. By way of example, this is achieved by means of associated slide bushings 10c (and 10d in Figure 5). However, it should be noted that the associated slide bushings 10c (and 10d in Figure 5) are merely exemplary and not for restricting the present invention thereto. Instead, use of any other applicable bearing types, such as roller bearings and so on, is likewise contemplated.

As described above with reference to Figure 2, if the drive shaft 6g is rotated, the worm 6f rotates and forces the worm gear 6e to rotate as well. The worm gear 6e in turn rotates the worm gear unit 9 resp. the hollow rotary axis 9a that forces the at least one pre-loadable torsion member 6d to rotate as well. Thus, the at least one pre-loadable torsion member 6d is twisted resp. pre-loaded with a respective pre-load.

It should be noted that the drive shaft 6g is exemplarily illustrated in Figure 3 as having a polygonal head 12b, preferentially a hexagonal head. This polygonal head 12b can be used for manually rotating the drive shaft 6g, e. g. by means of a suitable hand tool, such as a wrench. In this case, the electrical drive unit 6h of Figure 2 could be omitted and merely a lock wire 6i may be provided for locking the drive shaft 6g at the mounting element 8 in its adjusted position, as illustrated. However, in this case no different operating points of the weight compensation device 6 can be determined as described above with reference to Figure 2. Instead, the respective resulting weight compensation force 6c can only be adjusted either with respect to the opening movement, or with respect to the closing movement of the aircraft door 4d.

Figure 4 shows the at least one weight compensation device 6 with the adjustment unit 7 and the mounting element 8 of Figure 3. Figure 4 further illustrates the accommodation of the worm gear unit 9 resp. the hollow rotary axis 9a in the mounting element 8 by means of the associated slide bushings 10a, 10b, as well as the accommodation of the drive shaft 6g in the mounting element 8 by means of the associated slide bushing 10c.

Figure 5 shows the at least one weight compensation device 6 with the adjustment unit 7 and the mounting element 8 of Figure 3 and Figure 4 for further illustrating the accommodation of the drive shaft 6g in the mounting element 8 by means of the associated slide bushing 10c and an additional slide bushing 10d. Moreover, Figure 5 further illustrates meshing of the worm gear 6e, which is preferably integrally formed with the worm gear unit 9 resp. the hollow rotary axis 9a, with the worm 6f, which is preferably accommodated on the drive shaft 6g in a non-rotatable manner.

According to one aspect, the hollow rotary axis 9a is coupled to the at least one pre-loadable torsion member 6d at least by means of a form-fit connection 11a. Alternatively or additionally, a press-fit connection may be embodied between the hollow rotary axis 9a and the at least one pre-loadable torsion member 6d. However, it should be noted that any other connection means is likewise contemplated, such as bonding or gluing and so on.

Furthermore, according to one aspect the drive shaft 6g is embodied as a bolt 12a that is provided with the polygonal head 12b. Preferably, the worm 6f is coupled to the drive shaft 6g at least by means of a form-fit connection 11b. However, alternatively or additionally a press-fit connection may be embodied between the worm 6f and the drive shaft 6g. Nevertheless, it should be noted that any other connection means is likewise contemplated, such as bonding or gluing and so on. Furthermore, preferably shim washers 12c, 12d are arranged on the drive shaft 6g between the worm 6f and the slide bushings 10c, 10d resp. the mounting element 8.

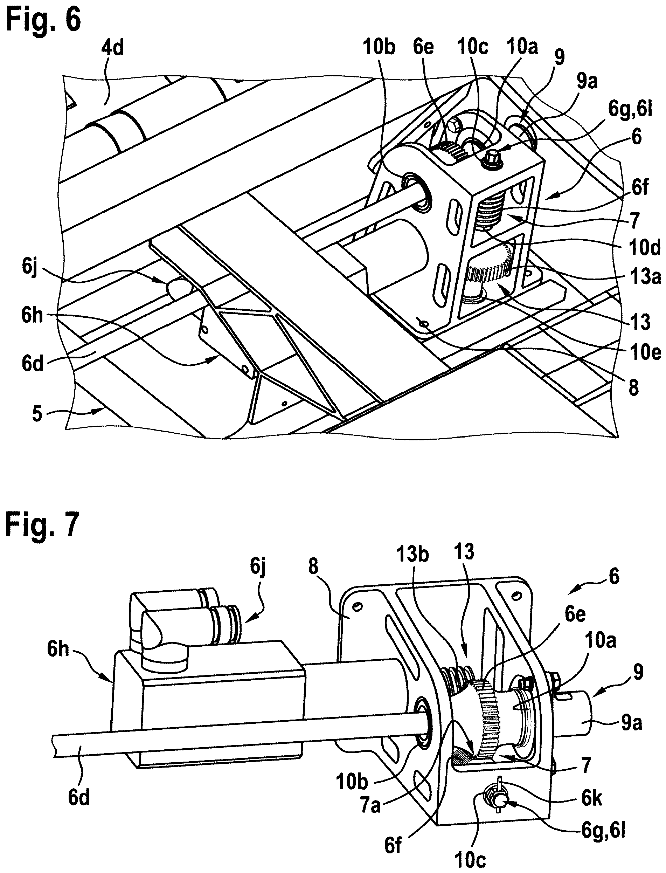

Figure 6 shows the aircraft door 4d with the door structure 5 of Figure 2, which is provided with the at least one weight compensation device 6 that comprises the adjustment unit 7 of Figure 3 to Figure 5. However, it should be noted that in contrast to Figure 3 to Figure 5 not only the driven side of the at least one weight compensation device 6 resp. the adjustment unit 7 is illustrated in Figure 6, but also a driving side thereof.

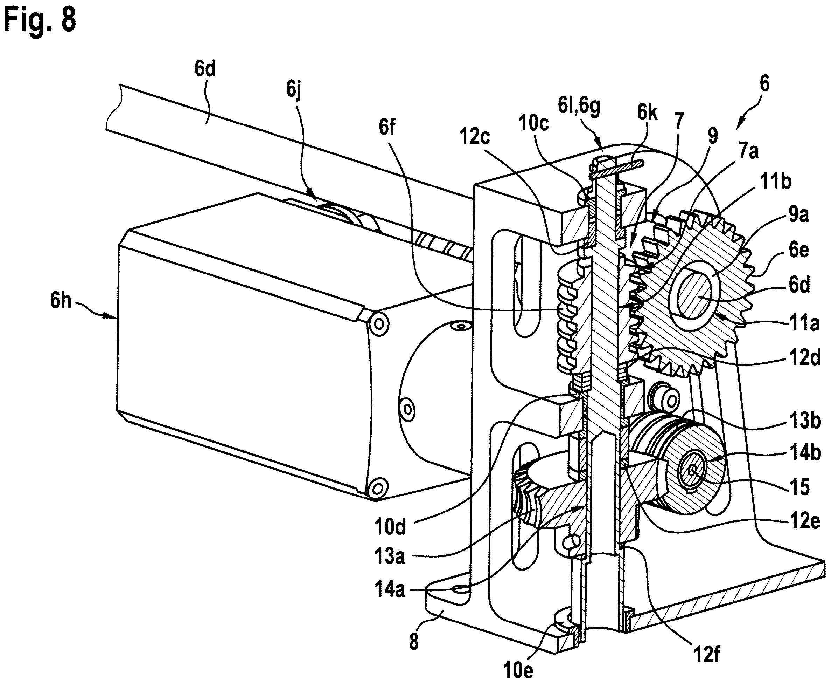

More specifically, according to one aspect the at least one weight compensation device 6 resp. the adjustment unit 7 is now again provided with the electrical drive unit 6h of Figure 2 on its driving side. The electrical drive unit 6h is preferably connected to at least one driving end worm drive 13 that is provided for transmitting driving power provided by the electrical drive unit 6h to the drive shaft 6g, as described in more detail below with reference to Figure 8. Therefore, the at least one driving end worm drive 13 preferentially comprises a driving end worm gear 13a that is coupled to the drive shaft 6g.

In order to be able to accommodate the driving end worm gear 13a, the drive shaft 6g is preferably prolongated compared to Figure 3 to Figure 5 and, therefore, also referred to as the "prolongated drive shaft 6g" hereinafter. The prolongated drive shaft 6g is illustratively not only accommodated in a rotatable manner in the mounting element 8 by means of the slide bushings 10c, 10d, but also by an additional slide bushing 10e. It should be noted that the additional slide bushing 10e is also merely exemplary and not for restricting the present invention thereto. Instead, use of any other applicable bearing types, such as roller bearings and so on, is again likewise contemplated.

Finally, in contrast to Figure 3 to Figure 5, the prolongated drive shaft 6g is no more provided with the polygonal head 12b. Instead, an exemplary cylindrical end section 6l is provided. Alternatively, any other suitable head section may likewise be provided.

Figure 7 shows the at least one weight compensation device 6 with the adjustment unit 7 and the at least one driving end worm drive 13, as well as the mounting element 8 of Figure 6. Figure 7 further illustrates the exemplary cylindrical end section 6l of the prolongated drive shaft 6g. Preferably, a pin 6k is accommodated in the cylindrical end section 6l, which exemplarily traverses the cylindrical end section 6l. The pin 6k is preferentially provided for fixing the prolongated drive shaft 6g in the mounting element 8 such that the prolongated drive shaft 6g cannot slip out of the mounting element 8.

Alternatively, the cylindrical end section may be provided e. g. with a screw thread onto which a nut is screwed. In this case, the pin 6k can be used to block the nut on the screw thread such that rotation of the nut on the prolongated drive shaft 6g is prevented in operation of the weight compensation device 6.

According to one aspect, the at least one driving end worm drive 13 comprises a driving end worm 13b. The latter is described in more detail below with reference to Figure 8.

Figure 8 shows the at least one weight compensation device 6 with the adjustment unit 7 and the at least one driving end worm drive 13, as well as the mounting element 8, of Figure 6 and Figure 7. Figure 8 further illustrates the pin 6k that traverses the cylindrical end section 6l of the prolongated drive shaft 6g, which is accommodated in a rotatable manner in the mounting element 8 by means of the slide bushings 10c, 10d, 10e.

According to one aspect, the at least one driving end worm drive 13 comprises the driving end worm gear 13a and the driving end worm 13b. The driving end worm gear 13a may also be referred to as a worm wheel and the driving end worm 13b as a worm screw.

The driving end worm gear 13a is preferentially coupled to the drive shaft 6g. Preferably, the driving end worm gear 13a is coupled to the drive shaft 6g at least by means of a form-fit connection 14a. However, alternatively or additionally a press-fit connection may be embodied between the driving end worm gear 13a and the prolongated drive shaft 6g. Nevertheless, it should be noted that any other connection means is likewise contemplated, such as bonding or gluing and so on. Preferably, shim washers 12e, 12f are arranged on the prolongated drive shaft 6g between the driving end worm gear 13a and e. g. associated shoulders provided on the prolongated drive shaft 6g.

The driving end worm gear 13a illustratively meshes with the driving end worm 13b. The driving end worm 13b is preferably mounted to a drive unit output shaft 15 of the electrical drive unit 6h. Preferentially, the driving end worm 13b is coupled to the drive unit output shaft 15 at least by means of a form-fit connection 14b. However, alternatively or additionally a press-fit connection may be embodied between the driving end worm 13b and the drive unit output shaft 15. Nevertheless, it should be noted that any other connection means is likewise contemplated, such as bonding or gluing and so on.

According to one aspect, the drive unit output shaft 15 is drivable by means of the electrical drive unit 6h and driving power provided by the electrical drive unit 6h is transmitted from the drive unit output shaft 15 to the drive shaft 6g via the at least one driving end worm drive 13. Preferably, activation of the drive unit output shaft 15 is required for activation of the at least one driving end worm drive 13.

It should be noted that the at least one driving end worm drive 13 is preferably a self-locking worm drive. However, it should be noted that such a self-locking capability is not mandatory for the at least one driving end worm drive 13 and may, thus, also be omitted. Nevertheless, use of the at least one driving end worm drive 13 advantageously allows to improve an underlying transmission ratio of the transmission of the driving power as well as realization of a 90° angle between the drive unit output shaft 15 and the prolongated drive shaft 6g for constructional reasons, i. e. in order to economize constructional space and to allow an improved positioning of the electrical drive unit 6h.

In operation of the at least one weight compensation device 6, the electrical drive unit 6h rotates the drive unit output shaft 15 and, thus, the driving end worm 13b. By rotating the driving end worm 13b, the driving end worm gear 13a is forced to rotate as well and, thus, rotates the prolongated drive shaft 6g. Consequently, the worm 6f is also rotated and, in turn, forces the worm gear 6e to rotate. The worm gear 6e in turn rotates the worm gear unit 9 resp. the hollow rotary axis 9a that forces the at least one pre-loadable torsion member 6d to rotate as well. Thus, the at least one pre-loadable torsion member 6d is twisted resp. pre-loaded with a respective pre-load.

It should be noted that modifications to the above described embodiments are within the common knowledge of the person skilled in the art and, thus, also considered as being part of the present invention. Furthermore, it should be noted that the inventive weight compensation device preferably satisfies at least the following functional requirements:
- Compensation of aircraft door weight and friction forces generated by mechanism bearings and seals,
- Adjustable resulting tension force of the pre-loadable torsion member,
- Storage of potential energy in case of loss of power supply,
- Adaptive to changing weight (e. g. condensed water) and temperature effects (e. g. on seals),
- Adjustment within a maximum of 20s, and
- [optional] Limit stop (software or hardware).

Furthermore, the inventive weight compensation device is preferably applicable in the following load cases:
- Normal operation load up to a resulting tension force of 273Nm (limit load),
- Ultimate load (peak load up to 3s; deformation accepted) with 1,5 * 273Nm = 410Nm.

Preferably, an average number of load cycles for normal operation of the inventive weight compensation device amounts to:
- 28800 flight cycles * 3 door cycles * 2,5 environmental factor = 216000 cycles with limit load.

Preferentially, the inventive weight compensation device is adapted for the following environmental conditions:
- Meet requirements of the Environmental Conditions and Test Procedures for Airborne Equipment DO-160 of the Radio Technical Commission for Aeronautics (RCTA/DO-160).

As electrical system for power supply, at least the following electrical systems are preferably useable:
- 115V (AC) at 400Hz,
- 220V (AC) at 50Hz, and
- 230V (AC) at 400Hz.

### Reference List

1 aircraft
2 aircraft airframe
3a aircraft passenger cabin
3b aircraft cargo deck
3c aircraft flight deck
4 plurality of aircraft doors
4a, 4b, 4c, 4d cabin access doors
4e cargo deck access door
5 door structure
6 weight compensation device
6a force transmission lever
6b force transmission rod
6c transmitted force
6d pre-loadable torsion member
6e worm gear (worm wheel)
6f worm (worm screw)
6g worm drive shaft
6h electrical drive unit
6i lock wire
6j power supply
6k pin
6l cylindrical end section
7 adjustment unit
7a worm drive
8 mounting element
9 worm gear unit
9a hollow rotary axis
10a, 10b, 10c, 10d, 10e slide bushings
11a torsion member to worm gear form-fit connection
11b drive shaft to worm form-fit connection
12a bolt
12b polygonal head
12c, 12d, 12e, 12f shim washers
13 driving end worm drive
13a driving end worm gear (driving end worm wheel)
13b driving end worm (driving end worm screw)
14a drive shaft to driving end worm gear form-fit connection
14b drive unit output shaft to driving end worm form-fit connection
15 drive unit output shaft

## Claims

1. An aircraft door (4d) with at least one weight compensation device (6), the weight compensation device (6) comprising at least one pre-loadable torsion member (6d), wherein the at least one pre-loadable torsion member (6d) is coupled to an adjustment unit (7) for adjusting a respective pre-load that is applied to the at least one pre-loadable torsion member (6d), **characterized in that** the adjustment unit (7) comprises at least one worm drive (7a).

2. The aircraft door (4d) of claim 1,
**characterized in that** the at least one worm drive (7a) is a self-locking worm drive.

3. The aircraft door (4d) of claim 2,
**characterized in that** the at least one worm drive (7a) comprises a worm gear (6e) that is mounted to the at least one pre-loadable torsion member (6d), and a worm (6f) that is mounted to a drive shaft (6g), wherein activation of the drive shaft (6g) is required for activation of the at least one worm drive (7a).

4. The aircraft door (4d) of claim 3,
**characterized in that** a worm gear unit (9) with a hollow rotary axis (9a) is provided, the worm gear (6e) being integrally formed with or rigidly attached to the hollow rotary axis (9a), wherein the hollow rotary axis (9a) is coupled to the at least one pre-loadable torsion member (6d) at least by means of a form-fit connection (11 a).

5. The aircraft door (4d) of claim 3,
**characterized in that** the worm (6f) is coupled to the drive shaft (6g) at least by means of a form-fit connection (11 b).

6. The aircraft door (4d) of claim 3,
**characterized in that** the drive shaft (6g) is coupled to an electrical drive unit (6h).

7. The aircraft door (4d) of claim 6,
**characterized in that** the electrical drive unit (6h) comprises an associated drive unit output shaft (15) that is drivable by means of the electrical drive unit (6h), wherein at least one driving end worm drive (13) is provided for transmitting driving power provided by the electrical drive unit (6h) from the associated drive unit output shaft (15) to the drive shaft (6g).

8. The aircraft door (4d) of claim 7,
**characterized in that** the at least one driving end worm drive (13) is a self-locking worm drive.

9. The aircraft door (4d) of claim 8,
**characterized in that** the at least one driving end worm drive (13) comprises a driving end worm gear (13a) that is mounted to the drive shaft (6g), and a driving end worm (13b) that is mounted to the associated drive unit output shaft (15), wherein activation of the associated drive unit output shaft (15) is required for activation of the at least one driving end worm drive (13).

10. The aircraft door (4d) of claim 9,
**characterized in that** the driving end worm gear (13a) is coupled to the drive shaft (6g) at least by means of a form-fit connection (14a).

11. The aircraft door (4d) of claim 9,
**characterized in that** the driving end worm (13b) is coupled to the associated drive unit output shaft (15) at least by means of a form-fit connection (14b).

12. The aircraft door (4d) of claim 6,
**characterized in that** the electrical drive unit (6h) is controllable such that the at least one pre-loadable torsion member (6d) is at least preloaded with a first pre-load during opening of the aircraft door (4d) and with a second pre-load during closing of the aircraft door (4d).

13. The aircraft door (4d) of claim 12,
**characterized in that** the first and second pre-loads are adjusted on the basis of a measured weight of the aircraft door (4d) and/or on the basis of respectively measured opening and/or closing forces required in uncompensated opening and/or closing movements.

14. The aircraft door (4d) of claim 1,
**characterized in that** the at least one pre-loadable torsion member (6d) is a torsion rod.

15. An aircraft (1) that comprises at least one aircraft door (4g) according to one of the preceding claims.
